# EUROPÄISCHE PATENTSCHRIFT

(11) **EP 3 665 042 B1**
(45) Veröffentlichungstag und Bekanntmachung des Hinweises auf die Patenterteilung: **14.04.2021**
(21) Anmeldenummer: 18725798.5
(22) Anmeldetag: 14.05.2018
(51) Int. Cl.: B60R 13/02, B60N 2/56

(54) **BAUTEIL MIT FORMVERÄNDERLICHER OBERFLÄCHE SOWIE VERFAHREN ZU SEINER HERSTELLUNG**
COMPONENT HAVING A SHAPE-VARIABLE SURFACE, AND METHOD FOR THE PRODUCTION THEREOF
ÉLÉMENT À SURFACE DE FORME VARIABLE ET SON PROCÉDÉ DE FABRICATION

(30) Priorität: 08.08.2017 DE 102017213797
(43) Veröffentlichungstag der Anmeldung: 17.06.2020
(73) Patentinhaber: Benecke-Kaliko AG, 30419 Hannover (DE)
(72) Erfinder: GERKEN, Andreas, 30161 Hannover (DE)
(74) Vertreter: Continental Corporation
(86) Internationale Anmeldenummer: PCT/EP2018/062311
(87) Internationale Veröffentlichungsnummer: WO 2019/029855

(56) Entgegenhaltungen:
- WO-A1-03/074885
- DE-A1-102004 059 874
- DE-A1-102005 014 333

## Beschreibung

Die Erfindung betrifft Bauteil mit einer formveränderlichen Oberfläche, insbesondere ausgebildet als Teil einer Innenverkleidung eines Fahrzeugs, wobei das Bauteil einen Bauteilträger als Stütz- oder Unterkonstruktion und einen darauf angeordneten mehrschichtig ausgebildeten Oberflächenbelag aufweist. Weiterhin betrifft die Erfindung ein zur Herstellung eines solchen Bauteiles besonders geeignetes Verfahren.

Im Bereich des Automobilinterieurs ist ein starker Trend zur Verbesserung der Qualitätsanmutung zu beobachten. Dieser Trend hat dazu geführt, dass bei vielen der typischen Folienanwendungen in Form von Formkörpern im Dekorbereich Kriterien wie die Griffigkeit, das "Anfühlen" (Haptik) und das gesamte optische und taktile Erscheinungsbild einen sehr hohen Stellenwert in der Beurteilung durch die Kunden gewonnen haben.

Auf der anderen Seite führt die allgemein zunehmende Digitalisierung und der zum Beispiel im Bereich der Fahrzeugausrüstungen immer mehr zunehmende Bedarf an Komforteinrichtungen nicht nur in diesen Bereichen dazu, dass der Wunsch nach immer stärkerer Individualisierung von Funktionen, Gegenständen oder Umgebungen besteht. Bleibt man bei den Fahrzeugen, so ist es bereits bekannt, zum Schließen oder Öffnen von Türen Systeme zu verwenden, die bei Annäherung eines zu einem Keyless-Entry-System gehörigen Schlüssels bzw. Schlüsselsenders an ein Fahrzeug das Entsperren desselben ermöglichen. Ebenfalls sind bereits Systeme bekannt, die anhand einer Prüfung von Fingerabdrücken oder durch individuelle Sprachsteuerung/Spracherkennung solche Funktionen auslösen.

So werden auch neuerdings Bezugsmaterialien bzw. flexible Flächenmaterialien als Funktions- oder Sensorelemente in Steuerungen mit einbezogen. Solche flexiblen Flächenmaterialien mit Sensor- oder Signalelementen sind zum Beispiel im Bereich der Kraftfahrzeugtechnik bekannt. Ausgangspunkt sind hier Überlegungen zur "Funktionalisierung" von bisher nur dekorativen Oberflächen oder Beschichtungsfolien im Innenraum von Kraftfahrzeugen, d.h. zur Integration einer Sensorik in die Bedienoberfläche von Gegenständen, mit dem Ziel der Bereitstellung von Bedienfunktionen. Bei flexiblen Folien mit genarbten oder geprägten Oberflächen, wie z.B. bei Kunstlederfolien für den Automobilinnenraum, die nicht nur extremen Dehnungen bei der Herstellung und beim Aufbringen auf die festen Trägen unterworfen sind, sondern auch höchsten Temperaturschwankungen im Betrieb, ist die Integration von Sensorik jedoch schwierig und deshalb bisher nicht durchgesetzt.

Auf der anderen Seite sind Berührungssensoren als HMI (= Human-Machine-Interface) in vielen Bereichen schon etabliert, z.B. als touch-screen-Einrichtungen bei Smartphones. Solche Bedienungselemente oder -funktionen ermöglichen eine intuitive Bedienung bei gleichzeitiger Vermeidung mechanischer Knöpfe, Schalter, Drehregler oder Einstellräder.

Ähnliche Entwicklungen wie bei den genannten Bedienelementen sind erfolgt bei auf die Insassen eines Fahrzeugs angepassten Einstellungen der Fahrzeugeinrichtungen, wie etwa Sitze, Spiegeleinstellungen, Lenkradhöhen etc. Hier sind jedoch mittlerweile und im Sinne der anfangs angesprochenen Individualisierung/Personalisierung Systeme erwünscht, die automatisch erkennen können, welcher Insasse vorhanden ist und die dessen bevorzugte Grundeinstellung von Fahrzeugeinrichtungen einstellen.

Bekannt sind diesbezüglich beispielsweise Sensoriksysteme zur Anwendung bei Sitzelementen insbesondere zur Passagiererkennung und -überwachung. So offenbart z.B. die DE 10 2011 085 263 B4 ein Sensorelement zur Erkennung der Sitzbelegung, welches eine Messspule und eine die Messspule umgebendes und eine weitere Federspule bildendes Doppelfederelement aufweist. Die Messspule wird mit einem Wechselstrom beaufschlagt. Durch die induktive Kopplung zwischen Messspule und Federspule wird dann in der Messspule eine Spannung induziert, die einer Krafteinwirkung auf die Federspule und damit auf ein Sitzelement proportional ist. Eine solche Sensorik ist jedoch zur Integration in flexible Flächenelemente eher nicht geeignet

Die DE 602 06 786 T2 offenbart ein Verfahren zur Bestimmung von Gewichtsparametern eines Sitzpassagiers, bei dem mindestens zwei Parameter eines Belegungssensors ermittelt werden und über eine Korrelation ein Wahrscheinlichkeitsvektor bestimmt wird, der es erlaubt, einen bestimmten Sitzpassagier zu erkennen.

Die DE 10 2012 002 037 A1 offenbart eine Vorrichtung zur Durchführung von Fahrerzustandsanalysen, bei der am Rücken des Fahrers bzw. in der Rückenlehne eines Fahrersitzes angeordnete flach ausgebildete Elektromyografie-Sensoren (EMG Sensoren) anhand von mathematischen Vitalanalysen den Fahrerzustand bestimmen sollen.

Geht man in einer solchen Zusammenschau der Fachgebiete weiter zur Gestaltung von Oberflächen als solchen, z.B. im Fahrzeuginnenraum/ KFZ-Innenraum, so sind dort dekorative Flächenmaterialien allgemein bei einer Vielzahl von Gegenständen bekannt. So weisen z. B. Armaturenbretter, Sitzbezüge und Türverkleidungen für Kraftfahrzeuge Leder- oder Textilbezüge auf, oder auch kunstlederne Innenverkleidungen / Kunststoffinnenverkleidungen mit dreidimensional geprägter Oberflächen bzw. Narbung.

Folien für die Innenverkleidung von Kraftfahrzeugen, für Möbel, Taschen oder ähnliches, landläufig auch als Kunstleder bezeichnet, besitzen oft einen mehrschichtigen Aufbau, sind vielfach unterschäumt und zeigen auf ihrer Oberseite dreidimensional strukturierte Oberflächen in verschiedensten Formen und Ausführungen. Der mehrschichtige Aufbau besteht in aller Regel aus einer oberen Deck- oder Dekorschicht, die mit der geprägten oder eingeformten Oberfläche versehen ist, und aus einer oder mehreren Unterschichten. Die Deckschicht ist in der Regel mit einer Lackschicht versehen und kann auch eingefärbt werden. Durch entsprechendes Einstellen der Schichten, auch durch angepasste Weichheit oder durch die bereits genannten geschäumten Schichten entsteht die gewünschte ansprechende Haptik, d.h. eine angenehm "weiche" Griffigkeit der Kunststofffolie sowie auch ein bestimmter Glanz, d.h. bestimmte Reflexionseigenschaften.

Weiterhin sind im Stand der Technik flächige Sensoren bekannt, beispielsweise ausgebildet als Berührungssensoren, als resistive und kapazitive Systeme. Resistive Systeme beruhen in der Regel auf zwei Lagen mit elektrisch leitendem oder halbleitendem Material (häufig ITO = Indium-Zinnoxid), wobei beide Lagen durch eine dünne Luftschicht oder Mikropunkte beabstandet sind. Durch Druck auf eine bestimmte Stelle werden beide Lagen kontaktiert und ein elektrisches Messsignal, welches durch die untere Lage gesendet wird, wird dadurch verändert. Dadurch lässt sich der Berührungspunkt lokalisieren. Solche Systeme sind Standard für starre Anwendungen wie Displays von Telefonen und Bediengeräten. Flexible und gleichzeitig dehnfähige Anwendungen lassen sich jedoch so nicht realisieren.

Kapazitive Berührungssensoren beruhen auf einem kapazitiven Kupplungseffekt. Durch eine geeignete Beschichtung eines Substrats können auch eine Vielzahl voneinander unabhängige Berührungssensoren realisiert werden, die auch die gleichzeitige Detektion einer Vielzahl von Berührungspunkten erlauben. Typischerweise ist die zu berührende Fläche mit einem Sensor-Array, d.h. mit einer Anordnung einer Vielzahl von horizontalen und vertikalen Sensoren versehen, die als Sender oder Empfänger elektrischer Signale dienen. Ein solches System offenbart die US 2006097991 A1, wobei dort ein so genanntes "Touch-Panel" gezeigt ist, welches eine transparente kapazitive Sensoranordnung aufweist, die unterschiedliche Positionen von Berührungen auf der Bedienfläche oder Funktionsfläche erkennen und in Signale umformen kann.

Bekannt sind auch Sensoren auf Basis von leitfähigen Textilien. Solche Sensoren sind flexibel und dehnfähig. Allerdings müssen die hier üblicherweise genutzten leitfähigen textilen Fäden entweder in üblichen textilen Verarbeitungsverfahren (Stricken, Weben etc.) verarbeitet werden, so dass nur flächige einzelne/separate elektrische Gebilde erzeugt werden können, ohne eine benutzerdefinierte Geometrie. Als Alternative können die leitfähigen Fäden benutzerdefiniert auf einen textilen Untergrund aufgestickt werden, so dass ein aufwändiger Arbeitsgang notwendig ist und die textile Ebenheit deutlich negativ beeinflusst ist.

Zusammenfassend lässt sich feststellen, dass im Stand der Technik auf vielen mehr oder weniger benachbarten Fachgebieten viele Ansätze zur Funktionalisierung von Folien oder flachen Schichten, Belägen oder Bezügen vorhanden sind. Allerdings gibt es bisher keine auch in Bezug auf die individuelle haptische Wahrnehmung, also auf das tastende, fühlende, räumliche und umgebungsorientierte "Begreifen" eines Gegenstands individualisierbare oder personalisierbare Oberfläche, Folie oder Beschichtung.

So gibt es zum Beispiel im Stand der Technik zurzeit keine individuell veränderbaren oder personalisierbare Oberflächen im Innenraum eines Fahrzeuges/Kraftfahrzeuges. Man kann zwar z.B. bei der Fahrzeugkonfiguration nur aus einem Katalog von Oberflächen auswählen, nach der einmal getroffenen Wahl ist eine weitere Veränderung der Oberfläche oder gar der Geometrie jedoch nicht mehr möglich. So findet eine bewusste Berührung der haptischen Oberflächen meistens nur beim Kauf statt und später nicht mehr. Eine Veränderung der Geometrie von einzelnen separaten bzw. abgetrennten oder abtrennbaren Oberflächenteilen wäre zwar mit Hilfe von Stellmotoren denkbar, ist jedoch aufgrund der dann erforderlichen aufwendigen Konstruktionen unpraktisch und aus Gründen des Designs unerwünscht. Nahtlose veränderliche Oberflächen sind bisher nur in Konzept- und Forschungsstudien im Flugzeubau und Außenkarosseriebau untersucht worden, z.B. um durch veränderliche Profilgeometrien der Flügel die Aerodynamik eines Fahrzeugs verschiedenen Situationen anpassen zu können

Die DE 10 2004 059874 A1 offenbart ein Bauteil mit einer formveränderlichen Oberfläche gemäß dem Oberbegriff des Anspruchs 1.

Für die Erfindung bestand also die Aufgabe, eine haptisch individualisierbare Oberfläche bereitzustellen, bzw. ein Bauteil mit einer dekorativen, funktionalen, flexiblen solchen Oberfläche, die sich temporär in ihrer Oberflächengeometrie verändern und an eine Berührung anpassen und/oder haptische Reize erzeugen kann, insbesondere ein solches Bauteil für den Innenraum eines Fahrzeugs.

Gelöst wird diese Aufgabe durch die auf ein Bauteil mit einer formveränderlichen Oberfläche gerichteten Merkmale des Hauptanspruchs. Weitere vorteilhafte Ausbildungen sind in den Unteransprüchen offenbart. Ebenfalls gelöst wird die Aufgabe durch die auf die Herstellung eines solchen Bauteils gerichteten Merkmale des Verfahrensanspruchs sowie seiner Weiterbildungen.

Dabei weist der auf dem Bauteilträger befindliche Oberflächenbelag des Bauteils mindestens folgende Schichten auf:
- eine an der Außenseite des Bauteils angeordnete Deckschicht, vorzugsweise eine lackierte Deckschicht,
- eine unterhalb der Deckschicht angeordnete flexible elastomere Schicht, vorzugsweise aus Silikon oder Latex,
- sowie eine unterhalb der flexiblen elastomeren Schicht angeordnete elastische und strukturell luftdurchlässige Trägerschicht, die rückseitig mit dem Bauteilträger verbunden ist,
wobei die strukturell luftdurchlässige, elastische Trägerschicht in Bezug auf ihre flächige Ausdehnung mindestens teilweise in diskrete und von luftundurchlässigen Zellwänden begrenzte Zellen bzw. Segmente unterteilt ist, die jeweils eine Teilfläche der Trägerschicht umfassen und gegeneinander luftdicht abtrennen.

Der Bauteilträger ist dabei mit Hohlkammern versehen, deren Innendruck einzeln oder in Gruppen steuerbar ist und die mit den Zellen bzw. Segmenten der elastischen Trägerschicht über Öffnungen und/oder Ventile so korrespondieren, dass die Zellen oder Segmente und mit Druck beaufschlagbar oder entlüftbar sind.

Der Bezeichnung "strukturell luftdurchlässig" besagt, dass die elastische Trägerschicht im Hinblick auf das Zusammenwirken ihres Aufbaus, Schichtaufbaus, ihrer Konstruktion und auch ihres Materials so gestaltet ist, dass eine Luftdurchlässigkeit vorhanden ist.

Durch das erfindungsgemäß gestaltet Bauteil lässt sich temporär die Geometrie in einem definierten Bereich seiner Oberfläche verändern, indem aus einzelnen Zellen bzw.

Segmenten Luft abgesaugt wird, so dass sich das darüber liegende flexible Verbundgebilde konkav genau an diesen Stellen verformt. Wenn die einzelnen Zellen durch ein Ventil abgedichtet sind, bleibt die Verformung solange bestehen, bis wieder Luft zugeführt wird und die darüber liegende Schicht sich wieder entspannt und wieder die ursprüngliche Kontur annimmt. Mit umgekehrten Vorzeichen passiert dasselbe mit den Zellen bzw. Segmenten, wenn Luft zugeführt wird. Dann verformen sich die darüber liegenden Schichten konvex.

Eine auf diese Weise temporär, d.h. für einen definierten Zeitraum in ihrer Geometrie veränderbare Oberfläche eines Bauteils führt unter anderem dazu, dass die Fahrt mit einem Fahrzeug für den Insassen jedesmal auch zu einem sensorischen Erlebnis wird.

So können zum Beispiel mit der Erzeugung eines konkaven Bereichs innerhalb der Oberfläche, also indem etwa in einer Oberfläche durch Entlüftung Vertiefungen entstehen oder schräge Flächen durch Befüllung in horizontale Flächen umgewandelt werden, temporäre Ablageflächen geschaffen werden. So kann zum Beispiel ein Bereich zur Ablage eines Smartphones geschaffen werden, das an der Stelle vielleicht induktiv geladen werden kann.

Auch lässt sich die Oberflächengeometrie je nach Fahrmodus (entspanntes Fahren, schnelles Fahren etc.) oder auch auf Wunsch individuell verändern.

Erfindungsgemäß ist die strukturell luftdurchlässige Trägerschicht ein Abstandsgewebe oder Abstandsgewirke. Solche Abstandsgewirke werden üblicherweise als textile Gebilde mit einer oberen und einer unteren textilen Begrenzungsfläche hergestellt, wobei die beiden Begrenzungsflächen durch abstandshaltende Verbindungsfäden, den so genannte Polfäden, auf Abstand gehalten werden. Abstandsgewebe/-gewirke besitzen daher besonders gute Eigenschaften in Bezug auf ein elastisches Verhalten normal zu ihrer Flächenausdehnung. Werden solche Abstandsgewirke in Zellen oder Segmente unterteilt, so kann durch eine Belüftung oder Vakuumisierung eine partielle Verformung auf besonders einfache Weise erreicht werden.

Eine weitere vorteilhafte Ausbildung besteht darin, dass jeweils diskreten Oberflächenbereichen des Oberflächenbelags Sensoren zugeordnet sind, wobei die Oberflächenbereiche mit Sensoren vorzugsweise korrespondierend zu den Zellen bzw. Segmenten der Trägerschicht ausgebildet sind, und bei dem mindestens ein die Signale der Sensoren verarbeitendes Steuergerät vorgesehen und der Innendruck der Hohlkammern abhängig von den verarbeiteten Signale steuerbar ist. Mit solchen Sensoren, die jeweils einzelnen Oberflächenbereichen zugeordnet sind, lassen sich die auf die Bauteiloberfläche einwirkenden Konstellation von Kräften und/oder Einwirkungen von Umgebungszuständen detektieren, wobei auch eine individuelle Erkennung und Zuordnung von Kraftkonstellationen und von Einwirkungen durch Personen und Zustände möglich wird.

Damit kann eine individuelle Einstellung des geometrisch veränderlichen Oberflächenbelags auf die jeweilige Person, also z.B. auf den jeweiligen Fahrzeuginsassen erfolgen. Ebenfalls können die Signale auch dafür verwendet werden, dass eine Erkennung der Person oder eine individuelle Anpassung in Form einer Kombination aus individuellen haptischen, akustischen und optischen Sinnesreizen erfolgt.

So können sowohl sichtbare Schalter, Regler als auch unsichtbare kapazitive Schalter durch Geometrieveränderung der formveränderlichen Oberfläche des Bauteils freigelegt oder angezeigt werden.

Das erfindungsgemäße Bauteil lässt sich auch in weiteren Anwendungen vorteilhaft verwenden. So können die jeweils diskreten Oberflächenbereichen des Oberflächenbelags zugeordnete Sensoren kapazitive Sensorfelder umfassen, insbesondere ausgebildet durch eine gitterartig ausgeführte Sensorschicht, mit deren Hilfe zum Beispiel die Kontur einer sich nähernden Hand erkannt werden und die Geometrie bei Berührung der Oberfläche konturgenau vertieft werden kann. Parallel dazu können dann im Fahrzeug durch die Berührung verschiedene Effekte ausgelöst werden, nämlich dass z.B. bestimmte andere Bedienelemente oder Tastfelder im Fahrzeug aufleuchten oder eine Beleuchtung aktiviert wird. Das haptische Berührungserlebnis kann auch dadurch verstärkt werden, dass insbesondere bei kühlerer Umgebungstemperatur eine schnellwirkende Heizung integriert ist. Sowohl der Sensor als auch die Heizung können bevorzug durch das Aufdrucken oder Aufbringen flexibler elektrisch leitfähiger Strukturen erzeugt werden. Es ist auch denkbar, bei der Erstberührung dem Benutzer ein zusätzliches Vibrations-Feedback zu geben.

Durch ein zeitlich und lokal abgestimmtes Entleeren und Befüllen einzelner Zellen mit Luft lassen sich auch "dynamische" Oberflächen erzeugen, die z.B. eine sichtbare und fühlbare Wellenbewegung ausführen.

Auch ist es möglich, die vorgeschriebenen integrierten Sensoren/sensorischen Bereiche mit einer individuellen Nutzererkennung zu verbinden. Das kann zum Beispiel über einen in der Oberfläche integrierten Fingerprint-Sensor, ein mitgeführtes Smartphone, eine mitgeführte Smartwatch oder über einen individuellen mitgeführten Fahrzeugschlüssel/Schlüsselsender erfolgen. Der Fingerprint-Sensor kann so auf der Oberfläche platziert sein, dass man ihn beispielsweise mit seinem Mittelfinger berührt, wonach die individuelle Nutzerkennung und parallel die oben beschriebene Konturformung erfolgt. Parallel dazu können dann im Fahrzeug individuelle personalisierte Einstellungen durchgeführt werden, die zu einem früheren Zeitpunkt bestimmt und als Profil abgespeichert wurden, z. B. eine automatische Sitzeinstellung, das Einstellen eines bestimmten Radiosenders, eine individuelle Sprachbegrüßung oder Musik, individuelle Beleuchtungseffekte im Fahrzeug. Auch kann durch einen ggf. weiteren integrierten kapazitiven Sensor zu Fahrtbeginn der Gemütszustand bzw. der Puls des Fahrers erkannt werden, so dass z.B. die Beleuchtung im Fahrzeug oder eine bestimmte Begrüßungsmusik angepasst wird und etwa bei hohem Puls grüne oder blaue Beleuchtung eingeschaltet wird.

Eine weitere vorteilhafte Ausbildung besteht darin, dass die Sensoren in Form von sensorischen Schichten innerhalb des Oberflächenbelags ausgebildet sind, vorzugsweise aufgebaut aus einer oder mehreren Schichten leitfähigen Materials (Paste). Das vereinfacht die Herstellung der Sensoren und erlaubt es, verschiedenste physikalische Effekte zu nutzen, beispielsweise eine durch Berührung sich verändernde Induktivität, Resistivität oder Kapazität im Zusammenspiel der einzelnen Schichten.

Die Integration einer beispielsweise kapazitiven Sensorschicht kann durch Aufdrucken einer elektrisch leitfähigen Struktur im Siebdruck oder im Inkjet-Verfahren auf einer der Verbundschichten erfolgen oder durch Verkleben mit einer Folie oder einem flächigen Gebilde, in welchem die elektrisch leitfähigen Strukturen schon integriert sind.

Eine weitere vorteilhafte Ausbildung besteht darin, dass der Oberflächen Belag eine Heizschicht aufweist, vorzugsweise ausgebildet aus einem flächig aufgebrachten resistiv leitfähigen Material. Mit einer solchen zusätzlichen Heizschicht kann in Auswertung der Sensorsignale nicht nur die Geometrie der Oberfläche geformt werden, sondern gleichzeitig auch mindestens für einzelne Bereiche eine Heizfunktion bereitgestellt werden. Ein Insasse, der seine Hand auf ein solches Bauteil legt, wird nicht nur eine angenehme Haptik als Empfindung bemerken, die durch das Anformen der Oberfläche an die Form seiner Handfläche entsteht, sondern hat gleichzeitig das Gefühl einer warmen Oberfläche. Dadurch, dass sich das Oberflächenmaterial sich aktiv an die aufliegende Hand anpasst, führt das zu einem intensiven haptischen und sensorischem Erlebnis beim Benutzer. Werden solche Bauteile beispielsweise für Prothesen von menschlichen Extremitäten verwendet, so kann bei Berührung ein Gefühl entstehen, dass einer menschlichen Berührung sehr ähnlich ist.

Zusätzlich zu solch einem angenehmen haptischen Erlebnis beim Nutzer kann eine integrierte Heizung bzw. Heizschicht auch zur Heizung der Umgebung oder des Innenraums ausgebildet sein.

Eine solche resistive Heizung ist vorteilhafterweise oberflächennah und kann, wie zuvor beschrieben, auch durch Aufdrucken einer elektrisch leitfähigen Struktur realisiert werden. Auch hier bietet sich beispielsweise der Siebdruck oder das Inkjet-Verfahren an, um auf einer der Verbundschichten eine Heizschicht aufzubringen. Ebenso möglich ist das Aufkleben einer Folie oder eines flächigen Gebildes, in der/dem die elektrisch leitfähigen Strukturen schon integriert sind.

Wie bereits oben anhand der Beispiele ausgeführt, kann ein solches Bauteil insbesondere für Innenverkleidungsteile in Kraftfahrzeugen genutzt werden.

Das zur Herstellung des erfindungsgemäßen Bauteils in besonderer Weise geeignete Verfahren ist ein so genanntes Umkehrstreichverfahren, was seinen Namen dadurch erhält, dass die einzelnen Schichten in "umgekehrter Reihenfolge", nämlich beginnend mit der obersten Schicht und endend mit der letzten, untersten Schicht auf einen Hilfsträger bzw. eine Hilfsträgerfolie aufgebracht werden. Die Hilfsträgerfolie wird dabei nach Abschluss des Herstellungsverfahrens vom Schichtverbund entfernt.

Bei diesem Verfahren wird zur Bildung eines Schichtverbundes
- zunächst die Deckschicht des Oberflächenbelags auf einen Hilfsträger bzw. auf eine Hilfsträgerfolie aufgebracht, vorzugsweise auf eine strukturierte bzw. genarbte Hilfsträgerfolie, wonach ggf. ein dünner Vermittler oder eine Primerschicht (rückseitig) auf die Deckschicht aufgebracht wird
- danach wird auf die Deckschicht oder auf die ggf. mit Vermittler oder Primer versehene Deckschicht eine aushärtbare Polymerschicht aufgebracht, vorzugsweise eine Silikonschicht, die nach dem Aushärten eine elastische Schicht ausbildet, wonach ggf. wiederum ein dünner Vermittler oder eine Primerschicht (rückseitig) auf die Silikonschicht aufgebracht wird,

Die besondere erfinderische Ausbildung des Herstellverfahrens besteht darin, dass
- nach Aufbringen der Silikonschicht eine Kaschiermasse und ein strukturell luftdurchlässiges thermoplastisches Abstandsgewirke oder -gewebe, vorzugsweise ein Polyester-Abstandsgewirke oder -gewebe auf Basis von Polyethylenterephthalat (PET), als strukturell luftdurchlässige, elastische Trägerschicht auf die Silikonschicht aufgebracht wird, respektive auf die ggf. mit Vermittler oder Primer versehene Silikonschicht aufgebracht wird,
- dass danach mit einem im Wesentlichen auf Schmelztemperatur des thermoplastischen Abstandsgewirkes oder -gewebes erwärmten/erhitzten Prägestempel bzw. einer Prägerolle das Abstandsgewirke oder -gewebe geprägt wird, wobei Stempel oder Rolle ein Positivprofil aufweisen, dass den Zellwänden der Zellen bzw. flächigen Segmente im Abstandsgewirke oder -gewebe entspricht, wodurch die unter dem Positivprofil befindlichen Bereiche thermoplastisch verformt werden und luftundurchlässige Stege oder Wände bilden,
- dass danach der so entstandene Schichtverbund auf den Bauteilträger aufgebracht wird, wobei das mit geprägten luftundurchlässigen Stegen oder Wänden versehene Abstandsgewirke oder -gewebe so auf der Oberfläche des Bauteilträgers angeordnet und mit letzterem verbunden wird, dass die Hohlkammern des Bauteilträgers mit den dann entstandenen diskreten und von den luftundurchlässigen Zellwänden oder Stegen begrenzten Zellen bzw. Segmenten korrespondieren.
Danach wird letztlich die dann außenliegende Hilfsträgerfolie entfernt und die Deckschicht ggf. lackiert.

Mit einem solchen Verfahren kann durch die Verwendung eines heißen Prägestempels / Prägewerkzeugs auf relativ einfache Weise die an sich sehr schwierige Segmentierung bzw. Herstellung von Zellen in dem Abstandsgewerbe durchgeführt werden, die ja unbedingt benötigt werden, um nach der Verbindung mit entsprechenden Zufuhrkanälen im Bauteilträger eine Entlüftung oder Belüftung und damit eine einstellbare Verformung der Oberfläche zu ermöglichen. Das Positivprofil des Prägestempels / Prägewerkzeugs, das den Zellwänden der Zellen bzw. der flächigen Segmente im Abstandsgewirke oder - gewebe entspricht, erhitzt und schmilzt das Abstandsgewebe entlang der Zellgrenzen und erzeugt dadurch in dem thermoplastischen Material luftundurchlässige Wände, die einen Luftdurchsatz in Ausdehnungsrichtung des Abstandsgewebes verhindern. Der Luftdurchsatz quer zur Ausdehnungsrichtung, also in Dickenrichtung, bleibt erhalten und wird schließlich nur die durch die an das Abstandsgewebes "oben und unten" anschließenden Flächen bzw. Schichten begrenzt. So entstehen dann die einzelnen Luftkammern oder (Luft-) Zellen.

In einer vorteilhaften Weiterbildung ist das Verfahren so ausgebildet, dass der Stempel oder die Rolle ein Positivprofil mit einer Wabenstruktur aufweisen, vorzugsweise mit einer hexagonalen Wabenstruktur gleichgroßer Zellen. Solche Zellen sind sehr einfach herzustellen und weisen aufgrund ihrer hexagonalen Ausbildung eine große Stabilität auf.

In einer weiteren vorteilhaften Ausbildung des Verfahrens, das sich durch eine besonders große Flexibilität im Hinblick auf die Zellform auszeichnet, wird nach Aufbringen der Silikonschicht die strukturell luftdurchlässige, elastische Trägerschicht mit ihren von luftundurchlässigen Zellwänden begrenzte Zellen bzw. Segmenten durch ein 3-D-Druckverfahren hergestellt und aufgebracht, vorzugsweise durch ein 3-D-Drucken von elastischen Polymeren, wonach dann der entstandene Schichtverbund auf den Bauteilträger aufgebracht wird. So werden beispielsweise unterschiedliche Zellformen bzw. Segmente herstellbar, ohne dass es eines jeweils neuen Prägewerkzeugs bedarf.

Eine weitere vorteilhafte Ausbildung des Verfahrens besteht darin, dass innerhalb des Schichtverbundes weitere Funktionsschichten, vorzugsweise Heizschichten oder sensorische Schichten aufgestrichen bzw. kaschiert werden. Natürlich können auch weitere Sensorschichten oder Schichten mit z.B. Leuchtsymbolen, Leuchtfunktionen oder Bedienelementen in Form von Folienschaltern etc. aufgebracht werden.

## Patentansprüche

1. Bauteil mit einer formveränderlichen Oberfläche, insbesondere ausgebildet als Teil einer Innenverkleidung eines Fahrzeugs, wobei das Bauteil einen Bauteilträger als Stütz- oder Unterkonstruktion und einen darauf angeordneten mehrschichtig ausgebildeten Oberflächenbelag aufweist, **dadurch gekennzeichnet, dass** der Oberflächenbelag mindestens folgende Schichten aufweist:
- eine an der Außenseite des Bauteils angeordnete Deckschicht, vorzugsweise eine lackierte Deckschicht,
- eine unterhalb der Deckschicht angeordnete flexible elastomere Schicht, vorzugsweise aus Silikon oder Latex,
- eine unterhalb der flexiblen elastomeren Schicht angeordnete elastische und strukturell luftdurchlässige Trägerschicht, die rückseitig mit dem Bauteilträger verbunden ist,
wobei die strukturell luftdurchlässige, elastische Trägerschicht in Bezug auf ihre flächige Ausdehnung mindestens teilweise in diskrete und von luftundurchlässigen Zellwänden begrenzte Zellen bzw. Segmente unterteilt ist, die jeweils eine Teilfläche der Trägerschicht umfassen und gegeneinander luftdicht abtrennen,
wobei der Bauteilträger mit Hohlkammern versehen ist, deren Innendruck einzeln oder in Gruppen steuerbar ist und die mit den Zellen bzw. Segmenten der elastischen Trägerschicht über Öffnungen und/oder Ventile so korrespondieren, dass die Zellen oder Segmente und mit Druck beaufschlagbar oder entlüftbar sind, dadurchgekennzeichnet, dass die strukturell luftdurchlässige Trägerschicht ein Abstandsgewebe oder Abstandsgewirke ist.

2. Bauteil nach Anspruch 1, bei dem jeweils diskreten Oberflächenbereichen des Oberflächenbelags Sensoren zugeordnet sind, wobei die Oberflächenbereiche mit Sensoren korrespondierend zu den Zellen bzw. Segmenten der Trägerschicht ausgebildet sind, und bei dem mindestens ein die Signale der Sensoren verarbeitendes Steuergerät vorgesehen und mindestens der Innendruck der Hohlkammern abhängig von den verarbeiteten Signale steuerbar ist.

3. Bauteil nach Anspruch 2, bei dem die Signale der Sensoren einer in einem Steuergerät vorgesehenen Verarbeitungseinrichtung zur Nutzer- oder Insassenerkennung sowie zur individualisierten Einstellung des Umgebungszustandes zuführbar sind.

4. Bauteil nach Anspruch 2 oder 3, bei dem die Sensoren in Form von sensorischen Schichten innerhalb des Oberflächenbelags ausgebildet sind, vorzugsweise aufgebaut aus einer oder mehreren Schichten leitfähigen und als Paste aufgebrachten Materials.

5. Bauteil nach einem der Ansprüche 1 bis 4, bei dem der Oberflächenbelag eine Heizschicht aufweist, vorzugsweise ausgebildet aus einem flächig aufgebrachten resistiv leitfähigen Material.

6. Verfahren zur Herstellung eines Bauteils nach Anspruch 1 bis 5 in einem Umkehrstreichverfahren, wobei zur Bildung eines Schichtverbundes
- zunächst die Deckschicht des Oberflächenbelags auf einen Hilfsträger bzw. auf eine Hilfsträgerfolie aufgebracht wird, vorzugsweise auf eine strukturierte bzw. genarbte Hilfsträgerfolie, wonach ggf. ein dünner Vermittler oder eine Primerschicht auf die Deckschicht aufgebracht wird
- danach auf die Deckschicht bzw. auf die ggf. mit Vermittler oder Primer versehene Deckschicht eine aushärtbare Polymerschicht aufgebracht wird, vorzugsweise eine Silikonschicht, die nach dem Aushärten eine elastische Schicht ausbildet, wonach ggf. wiederum ein dünner Vermittler oder eine Primerschicht auf die Silikonschicht aufgebracht wird,
**gekennzeichnet durch** folgende Verfahrensschritte:
- nach Aufbringen der Silikonschicht wird eine Kaschiermasse und ein strukturell luftdurchlässiges thermoplastisches Abstandsgewirke oder -gewebe als strukturell luftdurchlässige, elastische Trägerschicht auf die Silikonschicht aufgebracht bzw. auf die ggf. mit Vermittler oder Primer versehene Silikonschicht aufgebracht, vorzugsweise ein Polyester-Abstandsgewirke oder -gewebe auf Basis von Polyethylenterephthalat (PET),
- danach wird mit einem im Wesentlichen auf Schmelztemperatur des thermoplastischen Abstandsgewirkes oder -gewebes erwärmten Prägestempel bzw. einer Prägerolle das Abstandsgewirkes oder -gewebes geprägt, wobei Stempel oder Rolle ein Positivprofil aufweisen, dass den Zellwänden der Zellen bzw. flächigen Segmente im Abstandsgewirke oder -gewebe entspricht, wodurch die unter dem Positivprofil befindlichen Bereiche thermoplastisch verformt werden und luftundurchlässige Stege oder Wände bilden,
- danach wird der so entstandene Schichtverbund auf den Bauteilträger aufgebracht, wobei das mit geprägten luftundurchlässigen Stegen oder Wänden versehene Abstandsgewirke oder -gewebe so auf der Oberfläche des Bauteilträgers angeordnet und mit letzterem verbunden wird, dass die Hohlkammern des Bauteilträgers mit den dann entstandenen diskreten und von den luftundurchlässigen Zellwänden oder Stegen begrenzten Zellen bzw. Segmenten korrespondieren,
- wonach letztlich die dann außenliegende Hilfsträgerfolie entfernt und die Deckschicht ggf. lackiert wird.

7. Verfahren nach Anspruch 6, bei dem Stempel oder Rolle ein Positivprofil mit einer Wabenstruktur aufweisen, vorzugsweise mit einer hexagonalen Wabenstruktur gleichgroßer Zellen.

8. Verfahren nach Anspruch 7, bei dem nach Aufbringen der Silikonschicht die strukturell luftdurchlässige, elastische Trägerschicht mit ihren von luftundurchlässigen Zellwänden begrenzte Zellen bzw. Segmenten durch ein 3-D-Druckverfahren hergestellt und aufgebracht wird, vorzugsweise durch ein 3-D-Drucken von elastischen Polymeren, wonach dann der entstandene Schichtverbund auf den Bauteilträger aufgebracht wird.

9. Verfahren nach einem der Ansprüche 6 bis 8, bei dem innerhalb des Schichtverbundes weitere Funktionsschichten, vorzugsweise Heizschichten oder sensorische Schichten aufgestrichen bzw. kaschiert werden.

## Claims

1. Component having a shape-variable surface, in particular in the form of part of an interior trim of a vehicle, wherein the component has a component carrier as a supporting structure or substructure and a surface covering of a multi-layered form arranged thereon, **characterized in that** the surface covering has at least the following layers:
- a cover layer, preferably a coated cover layer, arranged on the outer side of the component,
- a flexible elastomeric layer, preferably of silicone or latex, arranged under the cover layer,
- an elastic and structurally air-permeable carrier layer, arranged under the flexible elastomeric layer and connected on the rear side to the component carrier,
wherein the structurally air-permeable elastic carrier layer is at least partially divided with respect to its flat extent into discrete cells or segments which are bounded by air-impermeable cell walls, respectively enclose and separate from one another in an airtight manner a partial area of the carrier layer,
wherein the component carrier is provided with hollow chambers, the internal pressure of which can be controlled individually or in groups and which correspond with the cells or segments of the elastic carrier layer via openings and/or valves in such a manner that the cells or segments can be pressurized or vented,
**characterized in that** the structurally air-permeable carrier layer is a woven or knitted spacer fabric.

2. Component according to Claim 1, in which discrete surface regions of the surface covering are respectively assigned sensors, wherein the surface regions are formed with sensors corresponding to the cells or segments of the carrier layer, and in which at least one control unit processing the signals of the sensors is provided and at least the internal pressure of the hollow chambers can be controlled dependent on the process signals.

3. Component according to Claim 2, in which the signals of the sensors can be fed to a processing device, provided in a control unit, for user or occupant identification and for individualized setting of the ambient state.

4. Component according to Claim 2 or 3, in which the sensors take the form of sensory layers within the surface covering, preferably made up of one or more layers of conductive material applied as a paste.

5. Component according to one of Claims 1 to 4, in which the surface covering has a coating layer, preferably formed from a resistively conductive material applied over the surface area.

6. Method for producing a component according to Claims 1 to 5 by the reverse coating process, wherein, to form a laminate,
- first the cover layer of the surface covering is applied to an auxiliary carrier or to an auxiliary carrier film, preferably to a structured or grained auxiliary carrier film, after which a thin mediator or a primer layer is applied to the cover layer
- after that, a curable polymer layer, preferably a silicone layer, which after curing forms an elastic layer, is applied to the cover layer or to the cover layer possibly provided with a mediator or primer, after which possibly once again a thin mediator or a primer layer is applied to the silicone layer,
**characterized by** the following method steps:
- after applying the silicone layer, a laminating compound and a structurally air-permeable thermoplastic knitted or woven spacer fabric, preferably a polyester knitted or woven spacer fabric on the basis of polyethylene terephthalate (PET), is applied as a structurally air-permeable, elastic carrier layer to the silicone layer or is applied to the silicone layer possibly provided with a mediator or primer,
- after that, the knitted or woven spacer fabric is embossed with an embossing die or an embossing roller heated substantially to the melting temperature of the thermoplastic knitted or woven spacer fabric, wherein the die or roller has a positive profile that corresponds to the cell walls of the cells or flat segments in the knitted or woven spacer fabric, whereby the regions located under the profile positives are thermoplastically deformed and form air-impermeable webs or walls,
- after that, the laminate thus created is applied to the component carrier, wherein the knitted or woven spacer fabric provided with embossed air-impermeable webs or walls is arranged on the surface of the component carrier and connected to the latter in such a way that the hollow chambers of the component carrier correspond with the then created discrete cells or segments bounded by the air-impermeable cell walls or webs,
- after which lastly the auxiliary carrier film then lying on the outside is removed and the cover layer is possibly coated.

7. Method according to Claim 6, in which the die or roller has a profile positive with a honeycomb structure, preferably with a hexagonal honeycomb structure of cells of the same size.

8. Method according to Claim 7, in which, after applying the silicone layer, the structurally air-permeable, elastic carrier layer with its cells or segments bounded by air-impermeable cell walls is produced and applied by a 3D printing process, preferably by 3D printing of plastic polymers, after which the laminate thus created is then applied to the component carrier.

9. Method according to one of Claims 6 to 8, in which, within the laminate, further functional layers, preferably heating layers or sensory layers, are applied or laminated.

## Revendications

1. Composant à surface de forme variable, conçu notamment comme partie d'un habillage intérieur d'un véhicule, le composant comportant un support de composant en tant que structure de support ou sous-structure et un revêtement de surface multicouche disposé sur celle-ci, **caractérisé en ce que** le revêtement de surface comporte au moins les couches suivantes :
- une couche de recouvrement, de préférence une couche de recouvrement peinte, disposée du côté extérieur du composant,
- une couche élastomère flexible, de préférence en silicone ou en latex, disposée au-dessous de la couche de recouvrement,
- une couche de support élastique et structurellement perméable à l'air disposée au-dessous de la couche élastomère flexible et reliée au support de composant du côté arrière,
la couche de support élastique structurellement perméable à l'air étant au moins partiellement divisée, dans son extension sensiblement bidimensionnelle, en cellules ou segments discrets qui sont délimités par des parois de cellule imperméables à l'air et qui comprennent chacun une partie de surface de la couche de support, lesquelles parties de surface sont séparées les unes des autres de manière étanche à l'air,
le support de composant étant pourvu de chambres creuses dont la pression intérieure peut être commandée individuellement ou en groupes et qui correspondent avec les cellules ou segments de la couche de support élastique par le biais d'ouvertures et/ou de clapets de telle sorte que les cellules ou segments puissent être soumis à la pression ou purgés, **caractérisé en ce que** la couche de support structurellement perméable à l'air est un tissu d'espacement ou un tricot d'espacement.

2. Composant selon la revendication 1, dans lequel des capteurs sont respectivement associés à des zones de surface discrètes du revêtement de surface, les zones de surface pourvues de capteurs étant conçues de manière à correspondre aux cellules ou segments de la couche de support, et dans lequel au moins une unité de commande qui traite les signaux des capteurs est prévue et au moins la pression intérieure des chambres creuses peut être commandée en fonction des signaux traités.

3. Composant selon la revendication 2, dans lequel les signaux des capteurs peuvent être amenés à un dispositif de traitement prévu dans une unité de commande pour la reconnaissance d'utilisateur ou d'occupant et pour le réglage individualisé de la condition environnementale.

4. Composant selon la revendication 2 ou 3, dans lequel les capteurs sont conçus sous forme de couches sensorielles à l'intérieur du revêtement de surface, de préférence composées d'une ou plusieurs couches de matériau conducteur appliqué sous forme de pâte.

5. Composant selon l'une des revendications 1 à 4, dans lequel le revêtement de surface comporte une couche chauffante, de préférence formée d'un matériau résistif conducteur appliqué de manière sensiblement bidimensionnelle.

6. Procédé de fabrication d'un composant selon les revendications 1 à 5 dans un procédé d'enduction inversé, pour former un composite de couches,
- la couche de recouvrement du revêtement de surface est d'abord appliquée sur un support auxiliaire ou sur un film de support auxiliaire, de préférence sur un film de support auxiliaire structuré ou grené, puis éventuellement un médiateur mince ou une couche d'apprêt est appliqué sur la couche de recouvrement,
- ensuite une couche de polymère durcissable, de préférence une couche de silicone qui forme une couche élastique après durcissement, est appliquée sur la couche de recouvrement ou sur la couche de recouvrement, éventuellement pourvue d'un médiateur ou d'un apprêt, puis éventuellement un médiateur mince ou une couche d'apprêt est à nouveau appliqué sur la couche de silicone,
**caractérisé par** les étapes de procédé suivantes :
- après application de la couche de silicone, une matière de placage et un tissu ou tricot d'espacement thermoplastique structurellement perméable à l'air sont appliqués comme couche de support élastique structurellement perméable à l'air sur la couche de silicone ou sur la couche de silicone éventuellement pourvue d'un médiateur ou d'un apprêt, de préférence un tissu ou tricot d'espacement en polyester à base de téréphtalate de polyéthylène (PET),
- ensuite le tissu ou tricot d'espacement est gaufré avec un tampon de gaufrage ou un rouleau de gaufrage chauffé sensiblement à la température de fusion du tissu ou tricot d'espacement thermoplastique, le tampon ou le rouleau comportant un profil positif qui correspond aux parois des cellules ou des segments sensiblement bidimensionnels dans le tissu ou tricot d'espacement de façon à déformer de manière thermoplastique les zones se trouvant sous le profil positif et à former des nervures ou des parois imperméables à l'air,
- puis le composite de couches résultant est appliquée sur le support de composant, le tissu ou tricot d'espacement pourvu de nervures ou parois gaufrés imperméables à l'air étant disposé sur la surface du support de composant et relié à ce dernier de sorte que les chambres creuses du support de composant correspondent avec les cellules ou segments discrets alors créés et délimités par les parois de cellule ou nervures imperméables à l'air,
- puis le film de support auxiliaire alors extérieur est finalement retiré et la couche de recouvrement est éventuellement peinte.

7. Procédé selon la revendication 6, dans lequel le tampon ou rouleau comporte un profil positif pourvu d'une structure en nid d'abeille, de préférence avec une structure en nid d'abeille hexagonale dont les cellules sont de même taille.

8. Procédé selon la revendication 7, dans lequel, après application de la couche de silicone, la couche de support élastique structurellement perméable à l'air, pourvue de ses cellules ou segments délimités par des parois de cellule imperméables à l'air, est produite et appliquée par un procédé d'impression 3D, de préférence par impression 3D de polymères élastiques, puis le composite de couches résultant est appliquée sur le support de composant.

9. Procédé selon l'une des revendications 6 à 8, dans lequel d'autres couches fonctionnelles, de préférence des couches chauffantes ou des couches sensorielles, sont enduites ou plaquées à l'intérieur du composite de couches.
